# EUROPÄISCHE PATENTSCHRIFT

(11) **EP 4 416 024 B1**
(45) Veröffentlichungstag und Bekanntmachung des Hinweises auf die Patenterteilung: **10.12.2025**
(21) Anmeldenummer: 22801160.7
(22) Anmeldetag: 14.10.2022
(51) Int. Cl.: B60T 15/20, B60T 13/68

(54) **ANHÄNGERSTEUERMODUL FÜR BREMSEINRICHTUNG UND PARKBREMSEINRICHTUNG**
TRAILER CONTROL MODULE FOR A BRAKE DEVICE, AND PARKING BRAKE DEVICE
MODULE DE COMMANDE DE REMORQUE POUR DISPOSITIF DE FREINAGE ET DISPOSITIF DE FREIN DE STATIONNEMENT

(30) Priorität: 16.10.2021 DE 102021126891; 21.01.2022 DE 102022101439
(43) Veröffentlichungstag der Anmeldung: 21.08.2024
(73) Patentinhaber: KNORR-BREMSE Systeme für Nutzfahrzeuge GmbH, 80809 München (DE)
(72) Erfinder: GRIESSER, Fabian, 80803 München (DE); STEINGRUBER, Christian, 82439 Großweil (DE)
(86) Internationale Anmeldenummer: PCT/EP2022/078648
(87) Internationale Veröffentlichungsnummer: WO 2023/062189

(56) Entgegenhaltungen:
- DE-A1- 102015 107 125
- DE-A1- 102015 112 490

## Beschreibung

Die vorliegende Erfindung betrifft ein Anhängersteuermodul für eine Bremseinrichtung, insbesondere elektronische Parkbremseinrichtung, für ein Fahrzeug, insbesondere Nutzfahrzeug, mit wenigstens einem Steuerkolben; und mit wenigstens einem Gehäuse, in welchem der Steuerkolben aufgenommen ist.

Ferner betrifft die vorliegende Erfindung eine Parkbremseinrichtung, insbesondere elektronische Parkbremseinrichtung, für ein Fahrzeug, insbesondere Nutzfahrzeug, mit wenigstens einem Anhängersteuermodul wie vorstehend beschrieben. Im Übrigen betrifft die vorliegende Erfindung ein Nutzfahrzeug, insbesondere mit wenigstens einem Zugfahrzeug und mit wenigstens einem Anhänger, mit wenigstens einer Parkbremseinrichtung und mit wenigstens einem Anhängersteuermodul wie vorstehend beschrieben.

Aus dem Stand der Technik sind bereits Parkbremseinrichtungen und damit im Zusammenhang stehende Anhängersteuermodule für Fahrzeuge und insbesondere Nutzfahrzeuge bekannt. Mit Blick auf Nutzfahrzeuge werden Bremssysteme mit Druckluft als Druckfluid verwendet, mit denen die Federspeicherbremszylinder eines Nutzfahrzeugs, aber auch die Bremsen eines Anhängers betrieben werden können.

So zeigt die DE 10 2015 107 125 A1 eine Vorrichtung zum Steuern einer Bremsanlage für ein Nutzfahrzeug mit einem Parkbremssteuerventil zum Bereitstellen einer Parkbremsfunktion für das Nutzfahrzeug und einem Anhängersteuerventil zum Bereitstellen einer Feststellbremsfunktion und einer Funktion des elektrischen Bremsens für den Anhänger, wobei das Anhängersteuerventil einen Parkbremskolben aufweist, der verschiebbar angeordnet ist, um abhängig von einem Belüftungszustand eines vierten Anhängersteuerventilanschluss eine Belüftung eines zweiten Anhängersteuerventilanschlusses über den ersten Anhängersteuerventilanschluss zum Bereitstellen der Feststellbremsfunktion und der Funktion des elektrischen Bremsens zu steuern.

Im Übrigen offenbart die DE 10 2016 003 034 A1 ein Fahrzeug, insbesondere ein Nutzfahrzeug, mit einer elektronischen Feststellbremse, die zumindest eine elektropneumatische Komponente zum Betätigen der Feststellbremse und eine Steuereinrichtung zum Ansteuern wenigstens einer solchen elektropneumatischen Komponente aufweist. Erfindungswesentlich ist hierbei, dass wenigstens eine solche elektropneumatische Komponente und/oder die Steuereinrichtung zumindest teilweise in einem von einer Druckluftaufbereitungseinheit unterschiedlichen Komponente integriert ist/sind.

Die Anhängersteuermodule aus dem im Stand der Technik benötigen stets ein Signal von der Parkbremseinrichtung, welches das Anhängersteuermodul (bzw. auch Anhängersteuerventil genannt) in den Fahr- oder Parkzustand schaltet und dafür sorgt, dass sich dieser Zustand nicht unbeabsichtigt ändert. Zudem kann im Stand der Technik durch die starre funktionale Kopplung von Parkbremseinrichtung und Anhängersteuermodul die Parkbremse des Anhängers nicht unabhängig von der Parkbremse des Zugfahrzeugs angesteuert werden.

Es gibt zudem verschiedene Parkstrategien (Anhänger ist gebremst bzw. ungebremst), die durch die Gestaltung des Anhängersteuermoduls festgelegt sind. Für die Schaltung des Park- bzw. Fahrzustandes des Anhängers ist demzufolge stets eine pneumatische Parkbremse im Zugfahrzeug notwendig, was die Schaltungsanordnung für die Parkbremse und Anhängersteuermodul aufwändig, teuer und bauraumbeanspruchend macht.

Weitere Probleme ergeben sich durch die Leitungslänge von der Parkbremseinrichtung zum Anhängersteuerventil bei verschiedenen Fahrzeugtypen, die variieren kann, so dass das Volumen der Steuerleitung für die Parkbremseinrichtung Schwankungen unterworfen ist. Es kann beispielsweise ein kleines Volumen in der Steuerleitung vorliegen, was einen schnellen Druckaufbau und Druckabbau in der Steuerleitung zum Anhängersteuermodul ergibt. Falls ein großes Volumen der Steuerleitung vorliegt, ergibt sich jedoch ein langsamerer bzw. trägerer Druckaufbau und Druckabbau in der Steuerleitung. Demzufolge ist das Regelungsverhalten der elektronischen Parkbremseinrichtung im Zusammenwirken mit dem Anhängersteuermodul aufwendig und schwierig abzustimmen, um einen bestimmungsgemäßen und sicheren Betrieb zu gewährleisten.

Es ist die Aufgabe der vorliegenden Erfindung, ein Anhängersteuermodul der eingangs genannten Art in vorteilhafter Weise weiterzubilden, insbesondere dahingehend, dass das Anhängersteuermodul strukturell einfacher und kostengünstiger aufgebaut ist und hinsichtlich des Steuerungs- bzw. Regelungsverhaltens verbessert ist sowie eine erhöhte Funktionsdichte aufweist.

Diese Aufgabe wird erfindungsgemäß gelöst durch ein Anhängersteuermodul mit den Merkmalen des Anspruchs 1. Danach ist vorgesehen, dass ein Anhängersteuermodul für eine Bremseinrichtung, insbesondere elektronische Parkbremseinrichtung, für ein Fahrzeug, insbesondere Nutzfahrzeug, mit wenigstens einem Steuerkolben; und mit wenigstens einem Gehäuse vorgesehen ist, in welchem der Steuerkolben aufgenommen ist, wobei das Gehäuse wenigstens einen Steueranschluss und wenigstens einen Rückkopplungsanschluss zum Steuern des Steuerkolbens aufweist, wobei das Gehäuse weiter wenigstens einen Versorgunganschluss aufweist, der mit wenigstens einer Versorgungsleitung zur Versorgung des Anhängersteuermoduls mit Druckfluid verbunden ist, wobei der Steuerkolben durch den Steueranschluss und durch den Rückkopplungsanschluss bistabil ansteuerbar ist.

Die Erfindung basiert auf dem Grundgedanken, dass das bistabile Verhalten des Anhängersteuermoduls nicht wie im Stand der Technik üblich durch eine Bremseinrichtung bzw. Parkbremseinrichtung bereitgestellt wird, sondern durch das Anhängersteuermodul an sich. Dies hat den Vorteil, dass das Anhängersteuermodul mit einer eigenen unabhängigen Bistabilität ausgestattet werden kann, die bisher durch die Parkbremseinrichtung und über die damit verbundene Steuerleitung aufwändig bereitgestellt wurde. Die Umschaltung der verschiedenen Parkstrategien eines Anhängers (gebremst bzw. ungebremst) mit gekoppelter Parkbremseinrichtung ist bisher per elektronischer Steuerung und sodann nur mit erheblichem Zusatzaufwand mit zusätzlichen externen Komponenten möglich. Durch eine integrierte Bistabilität des Anhängersteuermoduls lässt sich diese elektronische Steuerung mittels einer Softwarefunktion ohne Zusatzaufwand implementieren und insbesondere unabhängig von der Parkbremseinrichtung steuern bzw. regeln, woraus erhebliche Vorteile bezüglich der Funktionsausgestaltung des Anhängersteuermoduls folgen. Durch das Vorsehen eines Rückkopplungsanschlusses wird zudem eine verbesserte und vereinfachte strukturelle und funktionale Grundlage geschaffen, durch welche die Bistabilität des Anhängersteuermoduls besonders vorteilhaft, unabhängig und präzise umgesetzt werden kann. Hierbei ist denkbar, dass der Steueranschluss mit einer ersten Druckkammer verbunden ist, die durch eine erste pneumatische Wirkfläche des Steuerkolbens und durch das Gehäuse ausgebildet ist. Zudem ist denkbar, dass der Rückkopplungsanschluss mit einer zweiten Druckkammer verbunden ist, die durch eine zweite pneumatische Wirkfläche des Steuerkolbens und durch das Gehäuse ausgebildet ist. Die resultierende Druckkraft in der ersten Druckkammer, die auf die erste pneumatische Wirkfläche wirkt, ist dabei entgegengesetzt zu einer resultierenden Druckkraft in der zweiten Druckkammer, die auf die zweite pneumatische Wirkfläche wirkt. Zudem ist der Trend zur Elektrifizierung bei Nutzfahrzeugen zu beobachten, so dass diese zukünftig verstärkt elektrisch angetrieben werden (direkt elektrisch oder mittels Brennstoffzelle z.B.) und entsprechend rein elektromechanisch gebremst werden. Für diese Fahrzeuge, genauer gesagt die Zugfahrzeuge, entfällt die pneumatische Parkbremseinrichtung. Soll ein derartiges Zugfahrzeug jedoch mit einem konventionellen Anhänger mit Druckluftbremsen gepaart werden, kann das Zugfahrzeug mit dem erfindungsgemäßen Anhängersteuermodul ausgestattet werden, jedoch nicht mehr zusätzlich mit einer elektronischen Parkbremseinrichtung, was zu Gewichts-, Kosten- und Bauraumeinsparungen führt. Zusammenfassend kann das erfindungsgemäße Anhängersteuermodul entweder mit oder ohne eine Parkbremseinrichtung in einem Zugfahrzeug eines Nutzfahrzeugs vorgesehen werden, wobei die Parkbremseinrichtung des Anhängers durch das erfindungsgemäße Anhängersteuermodul unabhängig von der Parkbremseinrichtung des Zugfahrzeuges steuerbar bzw. regelbar ist.

Im Übrigen kann vorgesehen sein, dass der Steueranschluss mit wenigstens einer ersten Steuerleitung verbindbar ist, wobei die Versorgungsleitung wenigstens eine Versorgungsleitung-Abzweigung aufweist, wobei der Steueranschluss über die erste Steuerleitung und über die Versorgungsleitung-Abzweigung mit der Versorgungsleitung verbindbar ist. Durch die Verbindung der ersten Steuerleitung mit der Versorgungsleitung muss keine zusätzliche Steuerleitung mehr von einer elektronischen Parkbremse zum Anhängersteuermodul vorgesehen sein. Dies hat den Vorteil, dass sich die Länge der Steuerleitung erheblich verkürzt und somit die vorstehend beschriebenen Probleme aus dem Stand der Technik hinsichtlich der Steuerbarkeit bzw. Regelbarkeit des Anhängersteuermoduls und/oder der Parkbremse nicht mehr auftreten. Falls eine Kopplung mit einer elektronischen Parkbremse vorgesehen ist, ergeben sich somit Vorteile insbesondere für die Steuerbarkeit der Anhängersteuermoduls und der Parkbremse des Anhängers, da keine variablen Längen der Steuerleitungen zum Anhängersteuerventil mehr das Steuervolumen der elektronischen Parkbremseinrichtung negativ beeinflussen. Das Steuerungs- bzw. Regelungsverhalten der elektronischen Parkbremseinrichtung verbessert sich dadurch und ist folglich einfacher und präziser abzustimmen bzw. zu applizieren.

Weiter ist vorstellbar, dass die erste Steuerleitung wenigstens eine erste Steuer-Abzweigung aufweist, wobei der Rückkopplungsanschluss über wenigstens eine Rückkopplungsleitung mit der ersten Steuer-Abzweigung verbindbar ist. Diese Art der pneumatischen Verschaltung bietet zudem eine strukturell einfache und sichere Möglichkeit, den Steueranschluss und den Rückkopplungsanschluss mit derselben Druckluftquelle, sprich der Versorgungsleitung, zu verbinden sowie den Steueranschluss mit dem Rückkopplungsanschluss zu verbinden. Hierdurch wird ein strukturell sehr einfacher und kostengünstiger Aufbau für die Funktionalität der Bistabilität bereitgestellt. Im Übrigen erlaubt diese Verschaltung eine kurze Leitungslänge, so dass hierdurch eine schnelle und präzise Ansteuerung des Steueranschlusses und des Rückkopplungsanschlusses möglich ist.

Es kann vorgesehen sein, dass das Gehäuse einen Anhänger-Steueranschluss zum Steuern einer Betriebsbremse eines Anhängers aufweist, der mit einer Anhänger-Steuerleitung verbunden ist. Es ist vorstellbar, dass der Rückkopplungsanschluss im und/oder am Gehäuse im Wesentlichen direkt ausgebildet ist. Zusätzlich oder alternativ ist vorstellbar, dass der Rückkopplungsanschluss als wenigstens eine Anhänger-Steuerleitung-Abzweigung der Anhänger-Steuerleitung oder als der Anhänger-Steueranschluss ausgebildet ist. Beispielsweise kann das bedeuten, dass der Rückkopplungsanschluss der Anhänger-Steueranschluss ist. Gewissermaßen kann der Anhänger-Steueranschluss bzw. der Rückkopplungsanschluss und/oder die Anhänger-Steuerleitung über die Rückkopplungsleitung und die erste Steuerleitung mit dem Steueranschluss verbindbar sein.

Zudem ist denkbar, dass in der ersten Steuerleitung und/oder in der Rückkopplungsleitung wenigstens eine Drossel angeordnet ist. Insbesondere kann vorgesehen sein, dass in der Rückkopplungsleitung wenigstens eine Drossel angeordnet ist. Eine Drossel ermöglicht ein unterschiedlich schnelles Befüllen bzw. Bedrucken des Steueranschlusses und/oder des Rückkopplungsanschlusses und damit auch der damit kommunizierenden ersten und zweiten Druckkammern. Folglich kann ein bistabiles Verhalten des Steuerkolbens mit einer Änderung von dessen Schaltstellung zur Ansteuerung der Anhängerbremse verknüpft werden. Hierdurch lässt sich das Anhängersteuermodul strukturell sehr einfach aufbauen, da eine Drossel eine sehr zuverlässige, ausgereifte und bekannte Art der Steuerung der Druckgradienten an dem Steueranschluss bzw. dem Rückkopplungsanschluss darstellt.

Außerdem ist es möglich, dass in der ersten Steuerleitung wenigstens ein erstes Steuerventil, insbesondere ein 2/2-Wege-Magnetsteuerventil, angeordnet ist. Das Steuerventil ist insbesondere als 2/2-Wege-Sperrventil ausgebildet, so dass es eine Sperrstellung und eine Durchlassstellung für die erste Steuerleitung ausbildet. Durch definiertes bzw. getaktetes Sperren und Öffnen der ersten Steuerleitung durch das erste Steuerventil können die Drücke an dem Steueranschluss und dem Rückkopplungsanschluss in vorbestimmter bzw. definierter Weise konstant gehalten bzw. verändert werden, so dass das bistabile Verhalten des Anhängersteuerventils durch dieses erste Steuerventil verbessert wird und die Ansteuerung der Anhängerbremse noch präziser erfolgen kann. Im Übrigen ist ein Magnetsteuerventil deshalb vorteilhaft, da dessen Steuerung schnell und präzise sowie unabhängig von dem pneumatischen Schaltzustand der Parkbremse erfolgen kann und somit einfach eine Funktionserweiterung vorgesehen werden kann.

Des Weiteren kann vorgesehen sein, dass das Anhängersteuermodul wenigstens eine Steuerventilanordnung aufweist oder mit wenigstens einer Steuerventilanordnung gekoppelt ist, wobei die Steuerventilanordnung mit der ersten Steuerleitung und/oder mit der Rückkopplungsleitung verbindbar ist. Die Steuerventilanordnung ist vorteilhaft, weil durch sie beispielsweise der Steueranschluss und der Rückkopplungsanschluss präzise und definiert entlüftet werden kann. Durch die Entlüftung des Steueranschlusses und des Rückkopplungsanschlusses können die Drücke in der ersten und zweiten Druckkammern gesenkt werden, so dass in Antwort darauf beispielsweise der Kammerdruck in der zweiten Druckkammer verringert werden kann, der wiederum als ein Steuerdruck für die Betriebsbremse eines Anhängers ausgesteuert werden kann. Insofern ist eine Entlüftung für die präzise und definierte Steuerung des Anhängersteuermoduls essenziell notwendig.

Ebenfalls ist vorstellbar, dass die Steuerventilanordnung wenigstens ein zweites Steuerventil und/oder wenigstens ein drittes Steuerventil aufweist. Die Aufteilung der Steuerventilanordnung in wenigstens ein zweites Steuerventil und wenigstens ein drittes Steuerventil hat den Vorteil, dass sich diese Ventile mit unterschiedlichen Funktionen bzw. Funktionskombinationen belegen lassen, so dass der Funktionsumfang und die Steuerbarkeit bzw. die Regelbarkeit des Anhängersteuermoduls erhöht wird.

Darüber hinaus ist denkbar, dass das zweite Steuerventil als pneumatisch angesteuertes 2/2-Wege-Steuerventil ausgebildet ist und/oder wobei das dritte Steuerventil als 2/2-Wege-Magnetsteuerventil ausgebildet ist. Durch eine derartige Steuerventilanordnung wird es möglich, eine rein pneumatische Backup-Steuermöglichkeit vorzusehen, so dass sich die Betriebssicherheit des Anhängersteuermoduls und damit auch des gesamten Nutzfahrzeugs erhöhen lässt. In diesem Zusammenhang ist denkbar, dass das 2/2-Wege-Magnetsteuerventil für den regulären Betrieb verwendet wird und damit dessen Vorteile hinsichtlich dynamischer und präziser Steuerung in Form der Entlüftung der ersten Steuerleitung und der Rückkopplungsleitung genutzt werden. In einem unerwünschten Betriebszustand (wenn z.B. das erste und/oder dritte Steuerventil ausfallen) kann des Weiteren als Rückfallebene auf das zweite Steuerventil zurückgegriffen werden, mittels dessen nach wie vor eine Steuerung wie vorstehend beschrieben möglich ist, so dass die Gesamtsicherheit des Anhängersteuermoduls und des Fahrzeugs erheblich gesteigert werden.

Weiter ist möglich, dass das Gehäuse wenigstens einen Backup-Steueranschluss aufweist, der mit wenigstens einem Steuerausgang wenigstens eines Fußbremsmoduls über wenigstens eine Fußbremsventil-Steuerleitung verbindbar ist. Durch den Backup-Steueranschluss lässt sich die Gesamtsicherheit des Anhängersteuermoduls und des Fahrzeugs bzw. Nutzfahrzeugs steigern, da im Falle eines unerwünschten Betriebszustandes (wenn beispielsweise das erste und/oder dritte Steuerventil ausfallen oder ein elektronisches Problem in der Steuerungseinheit zu deren Ansteuerung vorliegt) des Anhängersteuermoduls nach wie vor eine von der elektronischen Steuerung unabhängige pneumatische Steuerbarkeit gewährleistet wird.

Zusätzlich kann vorgesehen sein, dass das zweite Steuerventil wenigstens einen pneumatischen Ventil-Steueranschluss aufweist, der über wenigstens eine zweite Steuerleitung mit der Fußbremsventil-Steuerleitung verbindbar ist. Die Verbindung des Anhängersteuermoduls mit dem Fußbremsmodul über die Fußbremsventil-Steuerleitung ist besonders aus funktionaler Hinsicht vorteilhaft. Denn das Fußbremsmodul steuert für die Betätigung der Betriebsbremse ohnehin ein pneumatisches Steuersignal aus, das neben dessen tatsächlicher Verwendung zusätzlich für den vorstehend beschriebenen Backup-Fall besonders einfach für die Ansteuerung des Anhängersteuermoduls verwendet werden kann.

Ferner ist vorstellbar, dass die erste Steuerleitung wenigstens eine zweite Steuer-Abzweigung aufweist, die zwischen dem ersten Steuerventil und der ersten Steuer-Abzweigung angeordnet ist, wobei die Steuerventilanordnung über wenigstens eine zweite Steuerleitung mit der zweiten Steuer-Abzweigung verbindbar ist. Diese Schaltungsstruktur bietet den Vorteil, dass sowohl die erste Steuerleitung als auch die Rückkopplungsleitung gleichzeitig und gemeinsam durch die Steuerventilanordnung ansteuerbar sind. Zudem ergeben sich durch die Kombination mit dem ersten und dritten Steuerventil zusätzliche und vorteilhafte Schaltungskombinationen (z.B. ein Trailer-Test Zustand), die sehr einfach umsetzbar sind. Aus diesen Gründen sind weniger Bauteile für deren Ansteuerung notwendig, so dass das Anhängersteuermodul kleiner, sicherer, günstiger und mit weniger Bauraum ausgebildet sein kann.

Auch ist es denkbar, dass das zweite Steuerventil in der Rückkopplungsleitung angeordnet ist. Diese Schaltungsstruktur bietet den Vorteil, dass im Backup-Fall, die Rückkopplungsleitung durch das zweite Steuerventil sperrbar ist, so dass die zweite Druckkammer im Anhängersteuermodul nicht mehr ansteuerbar ist. Hierdurch wird zwar das bistabile Verhalten des Anhängersteuermodul aufgehoben, wobei dieses Verhalten im Backup-Fall ohnehin nicht erforderlich ist. Folglich ergibt sich eine vereinfachte Ansteuerung des Anhängersteuermoduls im Backup-Fall, was zu einer Vergrößerung der Funktionssicherheit des Anhängersteuermoduls und des Nutzfahrzeugs führt.

Weiterhin kann vorgesehen sein, dass die Drossel in das zweite Steuerventil integriert ist. Diese Ausgestaltung ist sehr platzsparend, da die Drossel nicht extern bezogen auf das zweite Steuerventil angeordnet und befestigt werden muss. Zudem verringert sich die Anzahl an Anschlüssen zum Anschluss der Drossel in die zweite Steuerleitung.

Im Übrigen betrifft die vorliegende Erfindung eine Parkbremseinrichtung, insbesondere elektronische Parkbremseinrichtung, für ein Fahrzeug, insbesondere Nutzfahrzeug, mit wenigstens einem vorstehend beschriebenen Anhängersteuermodul nach einem der vorhergehenden Ansprüche. Sämtliche im Zusammenhang mit dem vorstehend beschriebenen erfindungsgemäßen Anhängersteuermodul sowie seiner möglichen Ausführungsformen stehenden strukturellen und funktionellen Merkmale können allein oder in Kombination auch bei der erfindungsgemäßen Parkbremseinrichtung vorgesehen sein und die damit in Zusammenhang stehenden Vorteile erzielt werden.

Des Weiteren betrifft die vorliegende Erfindung ein Nutzfahrzeug, insbesondere mit wenigstens einem Zugfahrzeug und mit wenigstens einem Anhänger, mit wenigstens einer vorstehend beschriebenen Parkbremseinrichtung und mit wenigstens einem vorstehend beschriebenen Anhängersteuermodul. Sämtliche im Zusammenhang mit dem vorstehend beschriebenen erfindungsgemäßen Anhängersteuermodul und der Parkbremseinrichtung sowie der möglichen Ausführungsformen stehenden strukturellen und funktionellen Merkmale können allein oder in Kombination auch bei dem erfindungsgemäßen Nutzfahrzeug vorgesehen sein und die damit in Zusammenhang stehenden Vorteile erzielt werden.

Gemäß der vorliegenden Beschreibung kann eine Leitung, beispielsweise irgendeine der hierin beschriebenen Leitungen, ein Kanal sein und/oder als ein Kanal funktionell ausgelegt sein.

Weitere Einzelheiten und Vorteile der Erfindung sollen nun anhand der in den Zeichnungen dargestellten Ausführungsbeispiele näher erläutert werden.

Es zeigen:
- Fig. 1: eine schematische Darstellung eines ersten Ausführungsbeispiels eines erfindungsgemäßen Anhängersteuermoduls;
- Fig. 2: eine schematische Darstellung des ersten Ausführungsbeispiels des erfindungsgemäßen Anhängersteuermoduls gemäß Fig. 1;
- Fig. 3: eine weitere schematische Darstellung des ersten Ausführungsbeispiels des erfindungsgemäßen Anhängersteuermoduls gemäß Fig. 1;
- Fig. 4: eine schematische Darstellung eines zweiten Ausführungsbeispiels eines erfindungsgemäßen Anhängersteuermoduls;
- Fig. 5: eine schematische Darstellung eines dritten Ausführungsbeispiels eines erfindungsgemäßen Anhängersteuermoduls;
- Fig. 6: eine schematische Darstellung eines vierten Ausführungsbeispiels eines erfindungsgemäßen Anhängersteuermoduls;
- Fig. 7: eine schematische Darstellung des vierten Ausführungsbeispiels des erfindungsgemäßen Anhängersteuermoduls gemäß Fig. 6;
- Fig. 8: eine schematische Darstellung eines fünften Ausführungsbeispiels eines erfindungsgemäßen Anhängersteuermoduls; und
- Fig. 9: eine schematische Darstellung eines sechsten Ausführungsbeispiels eines erfindungsgemäßen Anhängersteuermoduls.

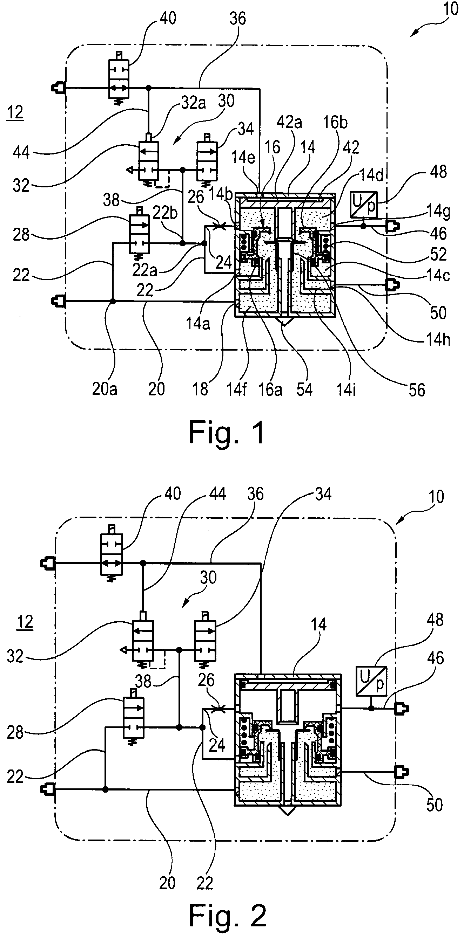

**Fig. 1** zeigt eine schematische Darstellung eines ersten Ausführungsbeispiels eines erfindungsgemäßen Anhängersteuermoduls 10 für eine elektronische Parkbremseinrichtung 12 eines Nutzfahrzeugs.

Das Anhängersteuermodul 10 weist ein Gehäuse 14 auf, wobei in dem Gehäuse 14 ein Steuerkolben 16 aufgenommen ist.

Das Gehäuse 14 weist einen Versorgunganschluss 18 auf, der mit einer Versorgungsleitung 20 zur Versorgung des Anhängersteuermoduls 10 mit Druckfluid in Form von Druckluft verbunden ist.

Die Versorgungsleitung 20 kann entweder mit einer Versorgungsleitung einer Bremseinrichtung oder einer Parkbremseinrichtung eines Nutzfahrzeugs verbunden sein oder direkt mit einem Anschluss eines Mehrkreisschutzventils.

Die Versorgungsleitung 20 weist eine Versorgungsleitung-Abzweigung 20a auf.

Das Gehäuse 14 weist weiter einen Steueranschluss 14a auf, der mit einer ersten Steuerleitung 22 verbindbar ist zum Steuern des Steuerkolbens 16.

Gemäß Fig. 1 ist der Steueranschluss 14a über die erste Steuerleitung 22 und über die Versorgungsleitung-Abzweigung 20a mit der Versorgungsleitung 20 verbindbar.

Folglich erstreckt sich die erste Steuerleitung 22 ausgehend von der Versorgungsleitung-Abzweigung 20a parallel zu der Versorgungsleitung 20.

Das Gehäuse 14 weist weiter einen Rückkopplungsanschluss 14b zum Steuern des Steuerkolbens 16 auf.

Gemäß Fig. 1 ist der Steueranschluss 14a mit einer ersten Druckkammer 14c verbunden, die im montierten Zustand zumindest teilweise durch eine erste pneumatische Wirkfläche 16a des Steuerkolbens 16 und durch eine Gehäuseschulter des Gehäuses 14 ausgebildet ist.

Dementsprechend ist der Rückkopplungsanschluss14b mit einer zweiten Druckkammer 14d verbunden, die im montierten Zustand zumindest teilweise durch eine zweite pneumatische Wirkfläche 16b des Steuerkolbens 16 und durch eine weitere Gehäuseschulter des Gehäuses 14 ausgebildet ist.

Die erste Steuerleitung 22 weist ferner eine erste Steuer-Abzweigung 22a auf.

Der Rückkopplungsanschluss14b ist über eine Rückkopplungsleitung 24 mit der ersten Steuer-Abzweigung 22a verbindbar.

Somit erstreckt sich die Rückkopplungsleitung 24 ausgehend von der ersten Steuer-Abzweigung 22a parallel zu der ersten Steuerleitung 22.

In der Rückkopplungsleitung 24 ist eine Drossel 26 angeordnet.

Zusätzlich oder alternativ kann vorgesehen sein, dass in der ersten Steuerleitung 22 eine weitere Drossel angeordnet ist.

In der ersten Steuerleitung 22 ist weiter ein erstes Steuerventil 28 angeordnet.

Das erste Steuerventil 28 ist als 2/2-Wege-Magnetsteuerventil ausgebildet und weist eine Sperrstellung und eine Durchlassstellung auf, wobei sich das erste Steuerventil 28 in seinem stromlosen Zustand in der Sperrstellung befindet.

Das Anhängersteuermodul 10 weist weiter eine Steuerventilanordnung 30 auf.

Zusätzlich oder alternativ kann vorgesehen sein, dass das Anhängersteuermodul 10 mit der Steuerventilanordnung 30 gekoppelt bzw. verbindbar ist.

Die Steuerventilanordnung 30 ist gemäß Fig. 1 mit der ersten Steuerleitung 22 verbunden.

Zusätzlich oder alternativ kann vorgesehen sein, dass die Steuerventilanordnung 30 mit der Rückkopplungsleitung 24 verbindbar ist.

Die Steuerventilanordnung 30 weist ein zweites Steuerventil 32 und ein drittes Steuerventil 34 auf.

Das zweite Steuerventil 32 ist als pneumatisch angesteuertes 2/2-Wege-Steuerventil ausgebildet und weist eine Sperrstellung und eine Entlüftungsstellung auf, wobei sich das zweite Steuerventil 32 in steuerdrucklosen Zustand in Sperrstellung befindet.

Das dritte Steuerventil 34 wiederum ist als 2/2-Wege-Magnetsteuerventil ausgebildet und weist auch eine Sperrstellung und eine Entlüftungsstellung auf, wobei sich das dritte Steuerventil 34 im stromlosen Zustand ebenfalls in Sperrstellung befindet.

Das Gehäuse 14 weist weiter einen Backup-Steueranschluss 14e auf, der mit einem Steuerausgang eines Fußbremsmoduls (nicht gezeigt) über eine Fußbremsventil-Steuerleitung 36 verbindbar ist.

Die Fußbremsventil-Steuerleitung 36 ist über eine Backup-Steuerleitung 44 mit dem zweiten Steuerventil 32 über einen pneumatischen Ventil-Steueranschlusses 32a des zweiten Steuerventils 32 verbunden.

In der Fußbremsventil-Steuerleitung 36 ist ein viertes Steuerventil 40 in Form eines 2/2-Wege-Magnetsteuerventils angeordnet.

Das vierte Steuerventil 40 weist eine Sperrstellung und eine Durchlassstellung auf, wobei sich das vierte Steuerventil 40 in stromlosen Zustand in Sperrstellung befindet (in Fig. 1 ist es jedoch umgekehrt dargestellt, worin das vierte Steuerventil 40 in stromlosen Zustand in Durchlassstellung gezeigt ist).

In dem Gehäuse 14 ist ferner ein Backup-Steuerkolben 42 aufgenommen, dessen pneumatische Wirkfläche 42a zusammen mit dem Gehäuse eine dritte Druckkammer 14f ausbildet.

Die erste Steuerleitung 22 weist weiter eine zweite Steuer-Abzweigung 22b auf, die zwischen dem ersten Steuerventil 28 und der ersten Steuer-Abzweigung 22a angeordnet.

Über eine entsprechende zweite Steuerleitung 38 ist die Steuerventilanordnung 30 gemäß Fig.1 mit der zweiten Steuer-Abzweigung 22b verbunden.

Das Anhängersteuermodul 10 weist gemäß Fig. 1 ferner einen Anhänger-Steueranschluss 14g für die Betriebsbremse eines Anhängers (nicht in Fig. 1 gezeigt) auf, der in die zweite Druckkammer 14d mündet und ferner mit einer entsprechenden Anhänger-Steuerleitung 46 verbunden ist.

Gewissermaßen ist der Rückkopplungsanschluss 14b über die zweite Druckkammer 14d mit den Anhänger-Steueranschluss 14g und somit mit der Anhänger-Steuerleitung 46 verbunden.

In dieser Anhänger-Steuerleitung 46 ist zudem ein Drucksensor 48 angeordnet.

Anhängersteuermodul 10 weist gemäß Fig. 1 ferner einen Anhänger-Versorgungsanschluss 14h zur Druckluftversorgung des Anhängers auf, der in eine vierte Druckkammer 14i des Gehäuses 14 mündet und ferner mit einer entsprechenden Anhänger-Versorgungsleitung 50 verbunden ist.

Am Boden des Gehäuses 14 ist zudem eine Entlüftung 54 angeordnet, die mit einem mittigen Entlüftungskanal verbunden ist, der sich von dem Boden axial bis ca. in die Hälfte des Gehäuses 14 erstreckt und dort ein freies Ende ausbildet.

Im Bereich des freien Endes ist eine Führungs- bzw. Dichtungshülse 56 auf dem Entlüftungskanal axial verschiebbar angeordnet und bildet mit dem Ventilkolben 16 in dessen geschlossener Stellung (bei entlüftetem ersten und zweiten Steueranschluss 14a, 14b) einen ersten Dichtsitz aus.

Ferner kann die Führungs- bzw. Dichtungshülse 56 mit einem im montierten Zustand darunter angeordneten Gehäusevorsprung bzw. Gehäuseschulter einen weiteren Dichtsitz ausbilden

Gemäß Fig. 1 bildet das Anhängersteuermodul 10 strukturell die mit der Strichpunktlinie dargestellte Systemgrenze aus, so dass gemäß erstem Ausführungsbeispiel alle vorstehend genannten pneumatischen Bauelemente wie das Gehäuse, die Ventile, Leitungen, Anschlüsse, Abzweigungen usw., die in Fig. 1 dargestellt sind, einzeln oder in Kombination eine bauliche Einheit in Form des Anhängersteuermoduls 10 ausbilden können.

Die weiteren an der Systemgrenze dargestellten Anschlüsse sind beispielhaft zu verstehen, so dass einer oder mehrere dieser Anschlüsse alternativ auch eine andere Position außerhalb oder innerhalb der Systemgrenze aufweisen kann.

Im Übrigen betrifft die vorliegende Erfindung eine elektronische Parkbremseinrichtung 12 für ein Nutzfahrzeug mit dem vorstehend beschriebenen Anhängersteuermodul 10.

Sämtliche im Zusammenhang mit dem vorstehend beschriebenen erfindungsgemäßen Anhängersteuermodul 10 sowie seiner möglichen Ausführungsformen stehenden strukturellen und funktionellen Merkmale können allein oder in Kombination auch bei der erfindungsgemäßen Parkbremseinrichtung 12 vorgesehen sein und die damit in Zusammenhang stehenden Vorteile erzielt werden.

Des Weiteren betrifft die vorliegende Erfindung ein Nutzfahrzeug mit einem Zugfahrzeug und mit wenigstens einem Anhänger sowie mit der vorstehend beschriebenen Parkbremseinrichtung und mit einem vorstehend beschriebenen Anhängersteuermodul 10.

Sämtliche im Zusammenhang mit dem vorstehend beschriebenen erfindungsgemäßen Anhängersteuermodul 10 und der Parkbremseinrichtung 12 sowie der möglichen Ausführungsformen stehenden strukturellen und funktionellen Merkmale können allein oder in Kombination auch bei dem erfindungsgemäßen Nutzfahrzeug vorgesehen sein und die damit in Zusammenhang stehenden Vorteile erzielt werden.

Die Funktion des Anhängersteuermoduls 10 lässt sich nun wie folgt beschreiben:
In Fig. 1 ist ein Schaltzustand des Anhängersteuermoduls 10 gezeigt, welcher einem Parkzustand des Nutzfahrzeugs im Stillstand mit gebremstem Anhänger entspricht.

Im gebremsten Zustand liegt an der Anhänger-Steuerleitung 46 der maximal mögliche aussteuerbare Steuerdruck von ca. 8,5 bar an, durch welchen die Betriebsbremsen des Anhängers ansteuerbar sind und im Stillstand des Nutzfahrzeugs als Parkbremsen fungieren können, wobei zusätzlich oder alternativ Federspeicherbremszylinder auch denkbar sind.

Um diesen Zustand zu erreichen, wird das erste Steuerventil 28 von einer mit ihm verbundenen Steuerungs- bzw. Regelungseinrichtung (nicht in Fig. 1 gezeigt) so lange geöffnet, bis an dem Steueranschluss 14a und dem Rückkopplungsanschluss 14b der maximale Steuerdruck anliegt.

Der Steuerkolben 16 ist folglich durch den Steueranschluss 14a und durch den Rückkopplungsanschluss 14b bistabil ansteuerbar.

Infolgedessen befindet sich der Steuerkolben 16 in seiner maximal geöffneten Position, so dass der Versorgungsanschluss 18 über die zweite Druckkammer 14d mit dem Anhänger-Steueranschluss 14g verbunden ist und die Bremszylinder des Anhängers mit maximalem Steuerdruck angesteuert werden, was einer maximalen Bremswirkung entspricht.

Sobald der maximale Steuerdruck vorliegt, wird das erste Steuerventil 28 wieder geschlossen, wobei während des Druckaufbaus die Steuerventilanordnung 30, sprich das zweite und dritte Steuerventil 32, 34 jeweils in der Sperrstellung verbleiben.

Die aus den Drücken in der ersten und zweiten Druckkammer 14c, 14d resultierenden Druckkräfte mit entgegengesetzter Richtung und die Kraft der Kolbenfeder 52 bilden ein Kräftegleichgewicht, so dass der Steuerkolben 16 bei Maximaldruck ruht.

Dass der Steuerkolben 16 aus diesem Gleichgewicht heraus in andere stabile Schaltstellungen bewegbar ist, liegt insbesondere auch an der Drossel 26, die in der Rückkopplungsleitung 24 angeordnet ist

Da die erste Steuerleitung 22 und die Rückkopplungsleitung 24 mit demselben Steuerdruck beaufschlagt werden, werden bei einer Bedruckung die erste und zweite Druckkammer 14c, 14d über den Steueranschluss 14a und den Rückkopplungsanschluss 14b bedruckt.

Da in der Rückkopplungsleitung 24 jedoch eine Drossel 26 angeordnet ist, weist die erste Steuerleitung 22 einen größeren Druckgradient als die zweite Steuerleitung 24 auf.

Da folglich in der ersten Druckkammer 14c der Steuerdruck schneller aufgebaut wird als in der zweiten Steuerkammer 14d, kann sich der Steuerkolben 16 zunächst innerhalb einer vorgegebenen Zeitspanne (z.B. so lange das erste Steuerventil 28 geöffnet ist) axial in Richtung der zweiten Druckkammer 14d bewegen, bis sich auch dort verzögert der entsprechende Steuerdruck aufgebaut hat und eine entsprechende Gegenkraft erzeugt, so dass der Steuerkolben 16 sodann zum Stillstand kommt eine stabile Position einnimmt.

Für die Entlüftung durch das dritte Steuerventil 34 (im Normalbetrieb) gilt in umgekehrter Reihenfolge das dementsprechend zuvor Beschriebene, wobei eine hierzu korrespondierende Schaltstellung des Steuerkolbens in Fig. 2 dargestellt ist.

**Fig. 2** zeigt eine weitere schematische Darstellung des ersten Ausführungsbeispiels des erfindungsgemäßen Anhängersteuermoduls 10 gemäß Fig. 1.

In Fig. 2 befindet sich das Anhängersteuermodul 10 in seinem entlüfteten Zustand, bezüglich welchem der Steueranschluss 14a und der Rückkopplungsanschluss 14b zuvor über das dritte Steuerventil 34 auf Atmosphärendruck oder nahe Atmosphärendruck entlüftet worden sind.

Erkennbar ist der entlüftete Zustand an der Stellung des Steuerkolbens 16, der sich in seiner untersten Stellung befindet und zusammen mit der Dichthülse 56 den entsprechenden Entlüftungsventilsitz ausbildet.

In Fig. 2 ist außerdem erkennbar, dass der Steuerkolben 16 die Dichthülse 56 in der Entlüftungsstellung axial verschoben hat, so dass die Anhänger-Steuerleitung 46 über die zweite Druckkammer 14d mit der Entlüftung 54 verbunden ist (vgl. auch Fig. 1).

Allerdings ermöglicht die Stellung von Steuerkolben 16 und Dichthülse 56 nach wie vor die Verbindung zwischen Versorgungsanschluss 18 des Anhängersteuermoduls 10 und des Anhänger-Versorgungsanschlusses 14h, so dass z.B. ein Druckluftbehälter des Anhängers oder ein anderer Verbraucher weiterhin mit Druckluft versorgt werden kann.

Die in Fig. 2 gezeigte Kolbenstellung entspricht einerseits dem bewegten Zustand des Nutzfahrzeugs (also dessen Fahrzustand), da an der Anhänger-Steuerleitung 46 kein Steuerdruck anliegt, und somit die Bremsen des Anhängers nicht betätigt werden und folglich keine Bremswirkung erzielt wird.

Alternativ kann die in Fig. 2 gezeigte Kolbenstellung auch einem geparkten Zustand des Nutzfahrzeugs (also im Stillstand) entsprechen, wenn der sogenannte Trailer-Test durchgeführt wird.

Die im Zusammenhang mit Fig. 1 und 2 beschriebenen Schaltstellungen des Steuerkolbens 16 stellen unter bestimmungsgemäßen bzw. normalen Zuständen die beiden Schaltstellungsgrenzzustände dar, bezüglich derer einerseits die maximale Bremswirkung erzielbar ist (vgl. Fig. 1) bzw. keine Bremswirkung erzielbar ist (vgl. Fig. 2).

Durch eine entsprechend getaktete (also entsprechend einer definierten Zeitdauer) Belüftung bzw. Entlüftung des Steueranschlusses 14a und des Rückkopplungsanschlusses 14b (durch Ansteuerung des ersten bzw. dritten Steuerventils 28, 34) können zusätzlich definierte Zwischenstellungen des Steuerkolbens 16 zwischen diesen beiden Grenzzuständen ausgesteuert werden, so dass dadurch die reguläre Betriebsbremssteuerung des Anhängers während des Fahrzustandes gesteuert wird.

Die Bistabilität des Steuerkolbens 16 wird dadurch erreicht, dass der Bremsdruck an den Anhänger über die Rückkopplungsleitung 24 auch an die Steuerleitung 22 weiterleitbar ist, wodurch der Steuerdruck sinken oder steigen kann je nachdem, ob der Steuer- oder der Bremsdruck höher ist bzw. wird.

Wird der Druck nicht durch die Ventile geregelt, kann der Druck immer weiter ansteigen und der Steuerkolben 16 bewegt sich in die Schaltstellung, die einem Parkzustand entspricht (vgl. Fig. 1), oder der Druck kann abfallen und der Steuerkolben 16 bewegt sich in die Schaltstellung, die einem Fahrzustand entspricht (vgl. Fig. 2).

Wie in Fig. 1 gezeigt ist, ist beim Parken die erste Druckkammer 14c über die Rückkopplungsleitung 24 und die zweite Druckkammer 14d mit der dritten Druckkammer 14f verbunden. Bei einem Luftverlust in der ersten Druckkammer 14c oder der zugehörigen Steuerleitung 22 wird über diese Verbindung bzw. diesen Pfad Luft nachgefördert. Dadurch bleibt der Steuerdruck am Steuerkolben 16 erhalten und der Steuerkolben 16 bleibt stabil in der Schaltstellung, die einem Parkzustand entspricht.

Wie in Fig. 2 gezeigt ist, ist beim Fahren die erste Druckkammer 14c über die Rückkopplungsleitung 24 mit der zweiten Druckkammer 14d und damit mit der Entlüftung 54 verbunden. Tritt eine Leckage auf und Luft strömt in die erste Druckkammer 14c oder in die zugehörige Steuerleitung 22, so kann die Luft über diese Verbindung bzw. diesen Pfad entlüftet werden (d.h. ist entlüftbar) und das Fahrzeug kann sicher im Fahrzustand bleiben bzw. der Steuerkolben 16 bleibt stabil in der Schaltstellung, die einem Fahrzustand entspricht.

Folglich können die im Zusammenhang mit Fig. 1 und 2 beschriebenen Schaltstellungen zwei stabile Zustände des Steuerkolbens 16 definieren; d.h. in anderen Worten die Bistabilität.

Folglich ist der Steuerkolben 16 durch den Steueranschluss 14a und durch den Rückkopplungsanschluss 14b bistabil ansteuerbar.

Bezugnehmend auf Fig. 1 und Fig. 2 ist es zusätzlich oder alternativ auch denkbar, dass wenigstens eine in dem Gehäuse 14 integrierte Verbindung, beispielsweise Leitung, vorgesehen sein kann, die die erste Druckkammer 14c und die zweite Druckkammer 14d miteinander verbindet.

Gewissermaßen kann in diesem Fall die Rückkopplungsleitung 24 als integrierte Leitung in dem Gehäuse 14 ausgebildet sein. Entsprechend können deren jeweilige (integrierte) Mündungen in bzw. an die erste Druckkammer 14c und die zweite Druckkammer 14d als einen Steueranschluss, beispielsweise den Steueranschluss 14a, und einen Rückkopplungsanschluss, beispielsweise den Rückkopplungsanschluss 14b, verstanden werden.

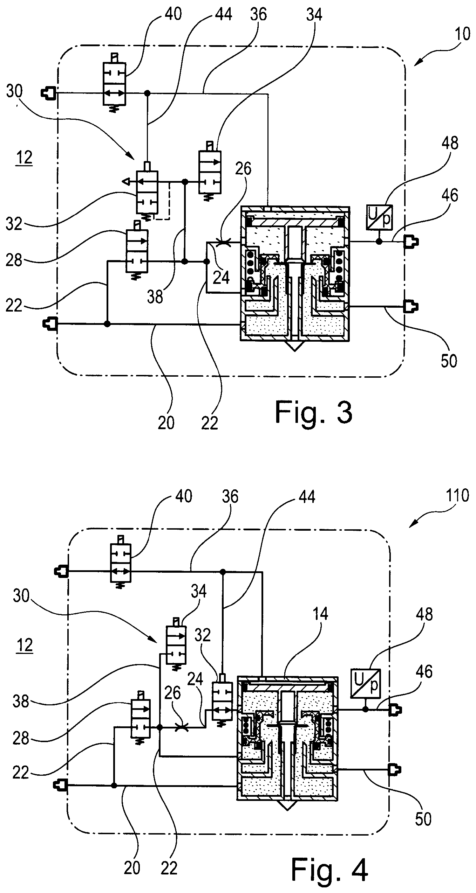

**Fig. 3** zeigt eine weitere schematische Darstellung des ersten Ausführungsbeispiels des erfindungsgemäßen Anhängersteuermoduls 10 gemäß Fig. 1.

In Fig. 3 ist der Backup-Fall dargestellt, d.h. es ist in einem der Steuerventile 28, 32, 34 und/oder in der Steuerungs- bzw. Regelungseinheit zu deren Ansteuerung zu einem Defekt oder Ausfall gekommen.

In diesem Fall bewegt sich das vierte Steuerventil 40 in die gemäß Fig. 1 bis 3 gezeigte Schaltstellung, so dass die Fußbremsventil-Steuerleitung 36 bedruckt wird, was ein Bedrucken des pneumatischen Steuereingangs 32a des zweiten Steuerventils 32 und des Backup-Steueranschlusses 14e des Gehäuses 14 zur Folge hat.

In Antwort darauf bewegt sich das zweite Steuerventil 32 in die in Fig. 3 gezeigte Durchlassstellung, so dass der Steueranschluss 14a und der Rückkopplungsanschluss 14b entlüftet werden und der Steuerkolben 16 sich in die unterste Stellung verschiebt und den Ventilsitz mit der Entlüftungshülse 56 schließt.

Im Übrigen hat das Bedrucken des Backup-Steueranschlusses 14e zur Folge, dass sich sodann der Backup-Kolben 42 in die in Fig. 3 gezeigte Stellung verschiebt und bei weiterer Verschiebung den Ventilsitz von der Entlüftungshülse 56 und dem Steuerkolben 16 öffnet.

Diese Öffnung hat zur Folge, dass nun wieder der Versorgungsanschluss 18 mit der Anhänger-Steuerleitung 46 verbunden werden kann, was im Backup-Fall zu einer sicheren und rein pneumatischen Bremsung des Anhängers führt, in der Art und Weise wie bereits vorstehend beschrieben.

Für eine Verminderung des Bremseffektes muss die Anhänger-Steuerleitung 46 entlüftet werden, was dadurch geschieht, dass der Backup-Kolben 42 in seine oberste Stellung verfährt und sich so die gemäß Fig. 2 gezeigte Schaltstellung auf den Backup-Fall übertragen lässt.

**Fig. 4** zeigt eine schematische Darstellung eines zweiten Ausführungsbeispiels eines erfindungsgemäßen Anhängersteuermoduls 110.

Das in Fig. 4 dargestellte zweite Ausführungsbeispiel des erfindungsgemäßen Anhängersteuermoduls 110 weist im Wesentlichen dieselben strukturellen und funktionalen Merkmale wie das in den Fig. 1 bis 3 dargestellte erste Ausführungsbeispiel des erfindungsgemäßen Anhängersteuermoduls 10 auf.

Lediglich die folgenden strukturellen und funktionalen Merkmalsunterschiede sollen aufgezeigt werden:
Gemäß Fig. 4 ist das zweite Steuerventil 32 in der Rückkopplungsleitung 24 angeordnet.

Das zweite Steuerventil 32 ist ferner in der Rückkopplungsleitung 24 zwischen der Drossel 26 und dem Rückkopplungsanschluss 14b angeordnet.

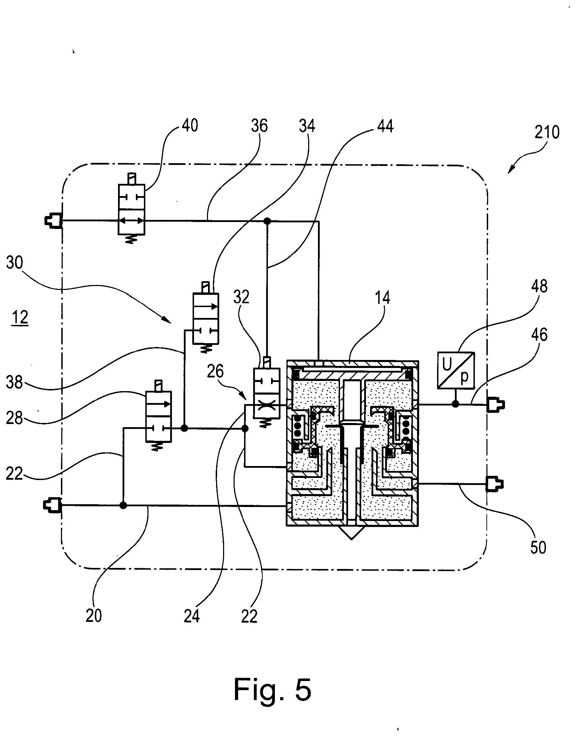

**Fig. 5** zeigt eine schematische Darstellung eines dritten Ausführungsbeispiels eines erfindungsgemäßen Anhängersteuermoduls 210.

Das in Fig. 5 dargestellte dritte Ausführungsbeispiel des erfindungsgemäßen Anhängersteuermoduls 210 weist im Wesentlichen dieselben strukturellen und funktionalen Merkmale wie das in Fig. 4 dargestellte zweite Ausführungsbeispiel des Anhängersteuermoduls 110 auf.

Lediglich die folgenden strukturellen und funktionalen Merkmalsunterschiede sollen aufgezeigt werden:
Die Drossel 26 ist in das zweite Steuerventil 32 integriert, so dass eine kompaktere und effizientere Ventileinrichtung ausgebildet ist und die Drosselwirkung sperrbar ist.

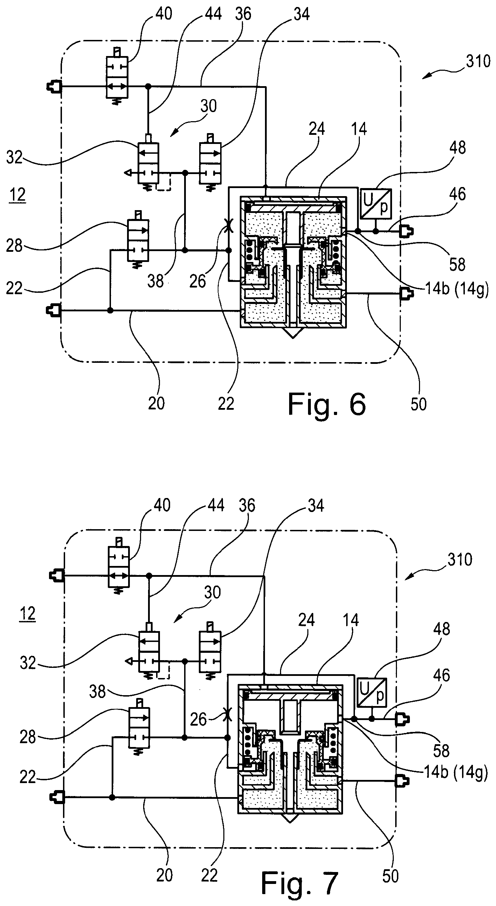

**Fig. 6** und **Fig. 7** zeigen eine schematische Darstellung eines vierten Ausführungsbeispiels eines erfindungsgemäßen Anhängersteuermoduls 310.

Das in Fig. 6 und 7 dargestellte vierte Ausführungsbeispiel des erfindungsgemäßen Anhängersteuermoduls 310 weist im Wesentlichen dieselben strukturellen und funktionalen Merkmale wie das in Fig. 1 und 2 dargestellte erste Ausführungsbeispiel des Anhängersteuermoduls 10 auf.

Ferner ist in Fig. 6 der stabile Zustand der Bistabilität gezeigt, der bezüglich des ersten Ausführungsbeispiels des Anhängersteuermoduls 10 in Fig. 1 gezeigt ist, und in Fig. 7 ist der stabile Zustand der Bistabilität gezeigt, der bezüglich des ersten Ausführungsbeispiels des Anhängersteuermoduls 10 in Fig. 2 gezeigt ist.

Lediglich die strukturellen und funktionalen Merkmalsunterschiede sollen im Folgenden aufgezeigt werden.

Der Rückkopplungsanschluss 14b ist als der Anhänger-Steueranschluss 14g ausgebildet. Gewissermaßen bildet der Rückkopplungsanschluss 14b den Anhänger-Steueranschluss 14g aus. In anderen Worten fungiert der Rückkopplungsanschluss 14b ferner als der Anhänger-Steueranschluss 14g.

Die Anhänger-Steuerleitung 46, die mit dem als der Anhänger-Steueranschluss 14g fungierenden Rückkopplungsanschluss 14b verbunden ist, weist eine Anhänger-Steuerleitung-Abzweigung 58 auf, mit welcher die Rückkopplungsleitung 24 verbunden ist.

Der Rückkopplungsanschluss 14b ist folglich über die Anhänger-Steuerleitung-Abzweigung 58 und die Rückkopplungsleitung 24 mit der ersten Steuer-Abzweigung 22a verbindbar.

Zusätzlich oder alternativ ist es auch denkbar, dass der Rückkopplungsanschluss 14b als die Anhänger-Steuerleitung-Abzweigung 58 ausgebildet ist.

Zusätzlich oder alternativ ist es auch denkbar, dass die Rückkopplungsleitung 24 an dem Rückkopplungsanschluss 14b angeschlossen ist und die Anhänger-Steuerleitung-Abzweigung 58 aufweist, mit welcher die Anhänger-Steuerleitung 46 verbindbar bzw. verbunden ist.

Im Vergleich zu dem ersten Ausführungsbeispiel ist die Rückkopplungsleitung 24 nicht mehr mit der zweiten Druckkammer 14d, sondern mit der Anhänger-Steuerleitung 46 verbunden. Gewissermaßen ist die Rückkopplungsleitung 24 aber noch über die Anhänger-Steuerleitung 46 mit der zweiten Druckkammer 14d verbunden.

Der Bremsdruck an den Anhänger ist über die Rückkopplungsleitung 24 auch an die Steuerleitung 22 weiterleitbar, wodurch der Steuerdruck sinken oder steigen kann je nachdem, ob der Steuer- oder der Bremsdruck höher ist bzw. wird.

Wird der Druck nicht durch die Ventile geregelt, kann der Druck immer weiter ansteigen und der Steuerkolben 16 bewegt sich in die Schaltstellung, die einem Parkzustand entspricht (vgl. Fig. 6), oder der Druck kann abfallen und der Steuerkolben 16 bewegt sich in die Schaltstellung, die einem Fahrzustand entspricht (vgl. Fig. 7).

Wie in Fig. 6 gezeigt ist, ist beim Parken die erste Druckkammer 14c über die Rückkopplungsleitung 24 und die zweite Druckkammer 14d mit der dritten Druckkammer 14f verbunden. Bei einem Luftverlust in der ersten Druckkammer 14c oder der zugehörige Steuerleitung 22 wird über diese Verbindung bzw. diesen Pfad Luft nachgefördert. Dadurch bleibt der Steuerdruck am Steuerkolben 16 erhalten und der Steuerkolben 16 bleibt stabil in der Schaltstellung, die einem Parkzustand entspricht.

Wie in Fig. 7 gezeigt ist, ist beim Fahren die erste Druckkammer 14c über die Rückkopplungsleitung 24 mit der zweiten Druckkammer 14d und damit mit der Entlüftung 54 verbunden. Tritt eine Leckage auf und Luft strömt in die erste Druckkammer 14c oder in die zugehörige Steuerleitung 22, so kann die Luft über diese Verbindung bzw. diesen Pfad entlüftet werden (d.h. ist entlüftbar) und das Fahrzeug kann sicher im Fahrzustand bleiben bzw. der Steuerkolben 16 bleibt stabil in der Schaltstellung, die einem Fahrzustand entspricht.

Folglich können die im Zusammenhang mit Fig. 6 und 7 beschriebenen Schaltstellungen zwei stabile Zustände des Steuerkolbens 16 definieren; d.h. in anderen Worten die Bistabilität.

Folglich ist der Steuerkolben 16 durch den Steueranschluss 14a und durch den Rückkopplungsanschluss 14b bistabil ansteuerbar.

Gewissermaßen ist der Steuerkolben 16 durch den Steueranschluss 14a über den Rückkopplungsanschluss 14b, insbesondere über den Rückkopplungsanschluss 14b und die Rückkopplungsleitung 24, bistabil ansteuerbar.

Bezugnehmend auf Fig. 6 und Fig. 7 ist es zusätzlich oder alternativ auch denkbar, dass wenigstens eine in dem Gehäuse 14 integrierte Verbindung, beispielsweise Leitung, vorgesehen sein kann, die die erste Druckkammer 14c und die zweite Druckkammer 14d miteinander verbindet.

Gewissermaßen kann in diesem Fall die Rückkopplungsleitung 24 als integrierte Leitung in dem Gehäuse 14 ausgebildet sein. Entsprechend können deren jeweilige (integrierte) Mündungen in bzw. an die erste Druckkammer 14c und die zweite Druckkammer 14d als einen Steueranschluss, beispielsweise den Steueranschluss 14a, und einen Rückkopplungsanschluss, beispielsweise den Rückkopplungsanschluss 14b, verstanden werden.

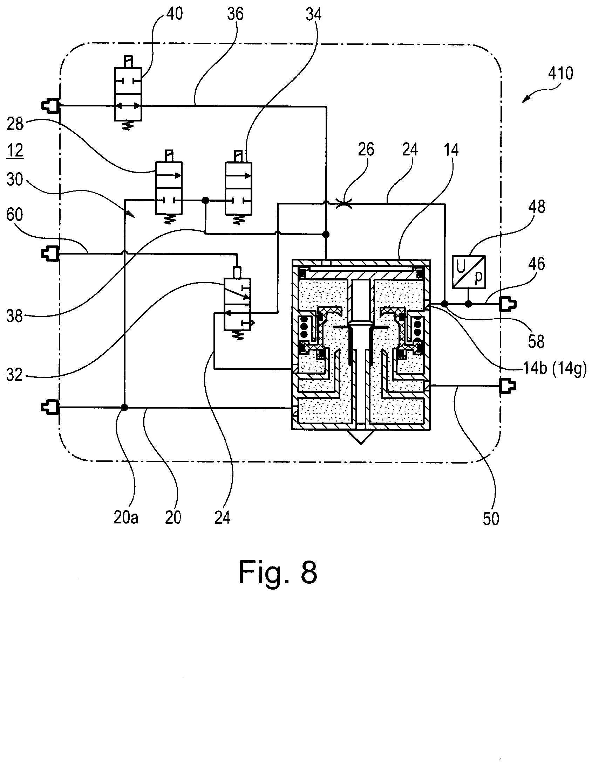

**Fig. 8** zeigt eine schematische Darstellung eines fünften Ausführungsbeispiels eines erfindungsgemäßen Anhängersteuermoduls 410.

Das in Fig. 8 dargestellte fünfte Ausführungsbeispiel des erfindungsgemäßen Anhängersteuermoduls 410 weist im Wesentlichen dieselben strukturellen und funktionalen Merkmale wie das in den Figuren 6 und 7 dargestellte Ausführungsbeispiel des erfindungsgemäßen Anhängersteuermoduls 310 auf.

Lediglich die folgenden strukturellen und funktionalen Merkmalsunterschiede sollen aufgezeigt werden:
Die Anhänger-Steuerleitung 46, die mit dem als der Anhänger-Steueranschluss 14g fungierenden Rückkopplungsanschluss 14b verbunden ist, weist ebenfalls die Anhänger-Steuerleitung-Abzweigung 58 auf, mit welcher die Rückkopplungsleitung 24 verbunden ist.

Diese Rückkopplungsleitung 24 ist an dem ersten Steueranschluss 14a angeschlossen, wobei das zweite Steuerventil 32 in der Rückkopplungsleitung 24 angeordnet ist.

Gewissermaßen fungiert der Teil der Rückkopplungsleitung 24, der zwischen dem zweiten Steuerventil 32 und dem ersten Steueranschluss 14a angeordnet ist, als eine bzw. die Steuerleitung 22.

Der Rückkopplungsanschluss 14b ist folglich über die Anhänger-Steuerleitung-Abzweigung 58 und die Rückkopplungsleitung 24 via dem zweiten Steuerventil 32 mit dem ersten Steueranschluss 14a verbindbar.

Zusätzlich oder alternativ ist es auch denkbar, dass der Rückkopplungsanschluss 14b als die Anhänger-Steuerleitung-Abzweigung 58 ausgebildet ist.

Zusätzlich oder alternativ ist es auch denkbar, dass die Rückkopplungsleitung 24 an dem Rückkopplungsanschluss 14b angeschlossen ist und die Anhänger-Steuerleitung-Abzweigung 58 aufweist, mit welcher die Anhänger-Steuerleitung 46 verbindbar bzw. verbunden ist.

Das in der Rückkopplungsleitung 24 angeordnete zweite Steuerventil 32 ist hier als pneumatisch angesteuertes 3/2-Wege-Steuerventil ausgebildet und weist eine Durchlassstellung und eine Entlüftungsstellung auf, wobei sich das zweite Steuerventil 32 in steuerdrucklosen Zustand in Durchlassstellung befindet.

Das zweite Steuerventil 32 ist über eine PPB/EPB-Leitung 60 (d.h. eine Pneumatik-Parkbremse-/Elektronik-Parkbremse-Leitung 60) mit einem PPB/EPB-Anschluss (d.h. einem Pneumatik-Parkbremse-/Elektronik-Parkbremse-Anschluss, über welchen z.B. eine entsprechende Parkbremsbetätigung weiterleitbar ist) der Parkbremseinrichtung 12 verbunden und über diese PPB/EPB-Leitung 60 pneumatisch ansteuerbar.

In der Durchlassstellung des zweiten Steuerventils 32 (vgl. Fig. 8) ist der erste Steueranschluss 14a mit der Anhänger-Steuerleitung 46 verbindbar bzw. verbunden via der Rückkopplungsleitung 24 und damit auch die erste Druckkammer 14c.

In der Entlüftungsstellung des zweiten Steuerventils 32 wird die Rückkopplungsleitung 24 durch die Schaltstellung des zweiten Steuerventils 32 unterbrochen und der erste Steueranschluss 14a ist entlüftbar bzw. wird entlüftet und damit die erste Druckkammer 14c (jeweilig via dem Teil der Rückkopplungsleitung 24, welcher zwischen dem zweiten Steuerventil 32 und dem ersten Steueranschluss 14a angeordnet ist).

Durch die zuvor beschriebene Einrichtung der Rückkopplungsleitung 24 ist der Bremsdruck an den Anhänger also über diese Rückkopplungsleitung 24 an den ersten Steueranschluss 14a weiterleitbar, wodurch der Steuerdruck sinken oder steigen kann je nachdem, ob der Steuer- oder der Bremsdruck höher ist bzw. wird.

Durch das zweite Steuerventil 32 ist der ersten Steueranschluss 14a zudem entlüftbar (in der Entlüftungsstellung).

Ferner ist die Fußbremsventil-Steuerleitung 36, die mit dem Backup-Steueranschluss 14e des Gehäuses 14 verbunden ist, mit dem ersten Steuerventil 28 und dem dritten Steuerventil 34 verbunden mittels einer Abzweigung.

Das erste Steuerventil 28 ist als 2/2-Wege-Magnetsteuerventil ausgebildet und weist eine Sperrstellung und eine Durchlassstellung auf, wobei sich das erste Steuerventil 28 in seinem stromlosen Zustand in der Sperrstellung befindet.

Das erste Steuerventil 28 ist ferner mit der Versorgungsleitung-Abzweigung 20a (leitungstechnisch) verbunden.

Die Versorgungsleitung-Abzweigung 20a ist somit über das erste Steuerventil 28 mit der Fußbremsventil-Steuerleitung 36 verbindbar bzw. verbunden (in der Durchlassstellung).

Das dritte Steuerventil 34 ist als 2/2-Wege-Magnetsteuerventil ausgebildet und weist eine Sperrstellung und eine Entlüftungsstellung auf, wobei sich das dritte Steuerventil 34 im stromlosen Zustand ebenfalls in Sperrstellung befindet.

Im Bezug auf die Bistabilität ist in der Fig. 8 der stabile Zustand der Bistabilität gezeigt, der bezüglich des vierten Ausführungsbeispiels des Anhängersteuermoduls 310 in Fig. 6 gezeigt ist.

Wird der Druck nicht durch die Ventile geregelt, kann der Druck immer weiter ansteigen und der Steuerkolben 16 bewegt sich in die Schaltstellung, die einem Parkzustand entspricht (vgl. Fig. 8), oder der Druck kann abfallen und der Steuerkolben 16 bewegt sich in die Schaltstellung, die einem Fahrzustand entspricht (nicht in den Figuren gezeigt).

Wie in Fig. 8 gezeigt ist, ist beim Parken die erste Druckkammer 14c über die Rückkopplungsleitung 24 und die zweite Druckkammer 14d mit der dritten Druckkammer 14f verbunden. Bei einem Luftverlust in der ersten Druckkammer 14c wird über diese Verbindung bzw. diesen Pfad Luft nachgefördert. Dadurch bleibt der Steuerdruck am Steuerkolben 16 erhalten und der Steuerkolben 16 bleibt stabil in der Schaltstellung, die einem Parkzustand entspricht.

Beim Fahren (nicht in den Figuren gezeigt) ist die erste Druckkammer 14c über die Rückkopplungsleitung 24 und dem zweiten Steuerventil 32 (in der Entlüftungsstellung) mit der Entlüftung verbunden. Tritt eine Leckage auf und Luft strömt in die erste Druckkammer 14c, so kann die Luft über diese Verbindung bzw. diesen Pfad entlüftet werden (d.h. ist entlüftbar) und das Fahrzeug kann sicher im Fahrzustand bleiben bzw. der Steuerkolben 16 bleibt stabil in der Schaltstellung, die einem Fahrzustand entspricht.

Folglich können zwei stabile Zustände des Steuerkolbens 16 definiert sein; d.h. in anderen Worten die Bistabilität.

Folglich ist der Steuerkolben 16 durch den Steueranschluss 14a und durch den Rückkopplungsanschluss 14b bistabil ansteuerbar.

Gewissermaßen ist der Steuerkolben 16 durch den Steueranschluss 14a über den Rückkopplungsanschluss 14b, insbesondere über den Rückkopplungsanschluss 14b und die Rückkopplungsleitung 24, bistabil ansteuerbar.

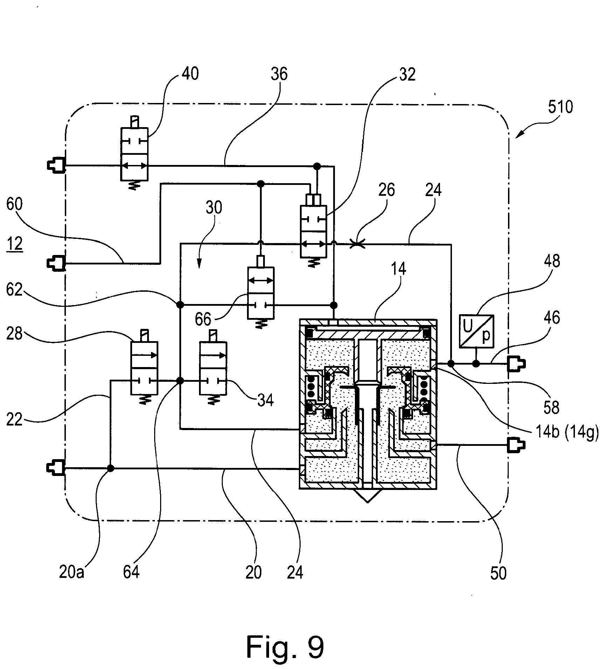

**Fig. 9** zeigt eine schematische Darstellung eines sechsten Ausführungsbeispiels eines erfindungsgemäßen Anhängersteuermoduls 510.

Das in Fig. 9 dargestellte sechste Ausführungsbeispiel des erfindungsgemäßen Anhängersteuermoduls 510 weist im Wesentlichen dieselben strukturellen und funktionalen Merkmale wie das in den Figur 8 dargestellte Ausführungsbeispiel des erfindungsgemäßen Anhängersteuermoduls 410 auf.

Lediglich die folgenden strukturellen und funktionalen Merkmalsunterschiede sollen aufgezeigt werden:
Die Anhänger-Steuerleitung 46, die mit dem als der Anhänger-Steueranschluss 14g fungierenden Rückkopplungsanschluss 14b verbunden ist, weist ebenfalls die Anhänger-Steuerleitung-Abzweigung 58 auf, mit welcher die Rückkopplungsleitung 24 verbunden ist.

Diese Rückkopplungsleitung 24 ist an dem ersten Steueranschluss 14a angeschlossen, wobei das zweite Steuerventil 32 in der Rückkopplungsleitung 24 angeordnet ist.

Gewissermaßen fungiert der Teil der Rückkopplungsleitung 24, der zwischen dem zweiten Steuerventil 32 und dem ersten Steueranschluss 14a angeordnet ist, als eine bzw. die Steuerleitung 22.

Der Rückkopplungsanschluss 14b ist folglich über die Anhänger-Steuerleitung-Abzweigung 58 und die Rückkopplungsleitung 24 via dem zweiten Steuerventil 32 mit dem ersten Steueranschluss 14a verbindbar.

Zusätzlich oder alternativ ist es auch denkbar, dass der Rückkopplungsanschluss 14b als die Anhänger-Steuerleitung-Abzweigung 58 ausgebildet ist.

Zusätzlich oder alternativ ist es auch denkbar, dass die Rückkopplungsleitung 24 an dem Rückkopplungsanschluss 14b angeschlossen ist und die Anhänger-Steuerleitung-Abzweigung 58 aufweist, mit welcher die Anhänger-Steuerleitung 46 verbindbar bzw. verbunden ist.

Das in der Rückkopplungsleitung 24 angeordnete zweite Steuerventil 32 ist hier als pneumatisch angesteuertes 2/2-Wege-Steuerventil ausgebildet und weist eine Durchlassstellung und eine Sperrstellung auf, wobei sich das zweite Steuerventil 32 in steuerdrucklosen Zustand in Durchlassstellung befindet.

Das zweite Steuerventil 32 ist über die PPB/EPB-Leitung 60 (d.h. die Pneumatik-Parkbremse-/Elektronik-Parkbremse-Leitung 60) mit dem PPB/EPB-Anschluss (d.h. dem Pneumatik-Parkbremse-/Elektronik-Parkbremse-Anschluss, über welchen z.B. eine entsprechende Parkbremsbetätigung weiterleitbar ist) der Parkbremseinrichtung 12 verbunden und über diese PPB/EPB-Leitung 60 pneumatisch ansteuerbar.

Ferner ist das zweite Steuerventil 32 mit der Fußbremsventil-Steuerleitung 36 verbunden und ferner auch über diese Fußbremsventil-Steuerleitung 36 pneumatisch ansteuerbar.

In der Durchlassstellung des zweiten Steuerventils 32 (vgl. Fig. 9) ist der erste Steueranschluss 14a mit der Anhänger-Steuerleitung 46 verbindbar bzw. verbunden via der Rückkopplungsleitung 24 und damit auch die erste Druckkammer 14c.

In der Sperrstellung des zweiten Steuerventils 32 wird die Rückkopplungsleitung 24 durch die Schaltstellung des zweiten Steuerventils 32 unterbrochen.

Die Rückkopplungsleitung 24 weist ferner eine erste Abzweigung 62 und eine zweite Abzweigung 64 auf, welche zwischen dem zweiten Steuerventil 32 und dem Steueranschluss 14a eingerichtet sind.

Eine Verbindungsleitung verbindet die erste Abzweigung 62 der Rückkopplungsleitung 24 mit der Fußbremsventil-Steuerleitung 36, wobei ein fünftes Steuerventil 66 in dieser Verbindungsleitung angeordnet ist.

Das in der Verbindungsleitung angeordnete fünfte Steuerventil 66 ist hier als pneumatisch angesteuertes 2/2-Wege-Steuerventil ausgebildet und weist eine Durchlassstellung und eine Sperrstellung auf, wobei sich das fünfte Steuerventil 66 in steuerdrucklosen Zustand in Sperrstellung befindet.

Das fünfte Steuerventil 66 ist über die PPB/EPB-Leitung 60 mit dem PPB/EPB-Anschluss der Parkbremseinrichtung 12 verbunden und über diese PPB/EPB-Leitung 60 pneumatisch ansteuerbar.

In der Durchlassstellung des fünften Steuerventils 66 ist der erste Steueranschluss 14a mit der Fußbremsventil-Steuerleitung 36 verbindbar bzw. verbunden via der Rückkopplungsleitung 24, insbesondere einem Teilabschnitt der Rückkopplungsleitung 24.

In der Sperrstellung des fünften Steuerventils 66 (vgl. Fig. 9) ist/wird die Rückkopplungsleitung 24 durch die Schaltstellung des fünften Steuerventils 66 von der Fußbremsventil-Steuerleitung 36 getrennt bzw. die besagte Verbindungsleitung ist/wird unterbrochen.

Indem sich das zweite Steuerventil 32 in steuerdrucklosen Zustand in Durchlassstellung befindet und sich das fünfte Steuerventil 66 in steuerdrucklosen Zustand in Sperrstellung befindet, können sich beide Steuerventile 32, 66 mittels einer (z.B. alleinigen) Ansteuerung über die PPB/EPB-Leitung 60 immer nur in gegensätzlichen Schaltstellungen befinden.

Durch die zuvor beschriebene Einrichtung der Rückkopplungsleitung 24 ist der Bremsdruck an den Anhänger also über diese Rückkopplungsleitung 24 an den ersten Steueranschluss 14a weiterleitbar, wodurch der Steuerdruck sinken oder steigen kann je nachdem, ob der Steuer- oder der Bremsdruck höher ist bzw. wird.

Ferner sind das erste Steuerventil 28 und das dritte Steuerventil 34 mit der Rückkopplungsleitung 24 verbunden mittels der zweiten Abzweigung 64 der Rückkopplungsleitung 24.

Die Fußbremsventil-Steuerleitung 36, die mit dem Backup-Steueranschluss 14e des Gehäuses 14 verbunden ist, ist somit via dem fünften Steuerventil 66 sowie der ersten und der zweiten Abzweigung 62, 64 der Rückkopplungsleitung 24 mit dem ersten Steuerventil 28 und dem dritten Steuerventil 34 verbindbar bzw. verbunden (bei Steuerdruckbeaufschlagung des fünften Steuerventils 66 über die PPB/EPB-Leitung 60).

Das erste Steuerventil 28 ist als 2/2-Wege-Magnetsteuerventil ausgebildet und weist eine Sperrstellung und eine Durchlassstellung auf, wobei sich das erste Steuerventil 28 in seinem stromlosen Zustand in der Sperrstellung befindet.

Das erste Steuerventil 28 ist ferner mit der Versorgungsleitung-Abzweigung 20a (leitungstechnisch) verbunden.

Die Versorgungsleitung-Abzweigung 20a ist somit über das erste Steuerventil 28 und das fünfte Steuerventil 66 mit der Fußbremsventil-Steuerleitung 36 verbindbar bzw. verbunden (in der Durchlassstellung).

Das dritte Steuerventil 34 ist als 2/2-Wege-Magnetsteuerventil ausgebildet und weist eine Sperrstellung und eine Entlüftungsstellung auf, wobei sich das dritte Steuerventil 34 im stromlosen Zustand ebenfalls in Sperrstellung befindet.

Im Bezug auf die Bistabilität ist in der Fig. 9 der stabile Zustand der Bistabilität gezeigt, der bezüglich des vierten Ausführungsbeispiels des Anhängersteuermoduls 310 in Fig. 6 gezeigt ist (und der bezüglich des fünften Ausführungsbeispiels des Anhängersteuermoduls 410 in Fig. 8 gezeigt ist).

Wird der Druck nicht durch die Ventile geregelt, kann der Druck immer weiter ansteigen und der Steuerkolben 16 bewegt sich in die Schaltstellung, die einem Parkzustand entspricht (vgl. Fig. 9), oder der Druck kann abfallen und der Steuerkolben 16 bewegt sich in die Schaltstellung, die einem Fahrzustand entspricht (nicht in den Figuren gezeigt).

Wie in Fig. 9 gezeigt ist, ist beim Parken die erste Druckkammer 14c über die Rückkopplungsleitung 24 und die zweite Druckkammer 14d mit der dritten Druckkammer 14f verbunden. Bei einem Luftverlust in der ersten Druckkammer 14c wird über diese Verbindung bzw. diesen Pfad Luft nachgefördert. Dadurch bleibt der Steuerdruck am Steuerkolben 16 erhalten und der Steuerkolben 16 bleibt stabil in der Schaltstellung, die einem Parkzustand entspricht.

Beim Fahren (nicht in den Figuren gezeigt) ist die erste Druckkammer 14c über die Rückkopplungsleitung 24 mit der zweiten Druckkammer 14d und damit mit der Entlüftung 54 verbunden. Tritt eine Leckage auf und Luft strömt in die erste Druckkammer 14c, so kann die Luft über diese Verbindung bzw. diesen Pfad entlüftet werden (d.h. ist entlüftbar) und das Fahrzeug kann sicher im Fahrzustand bleiben bzw. der Steuerkolben 16 bleibt stabil in der Schaltstellung, die einem Fahrzustand entspricht.

Folglich können zwei stabile Zustände des Steuerkolbens 16 definiert sein. Diese zwei Zustände definieren die Bistabilität.

Folglich ist der Steuerkolben 16 durch den Steueranschluss 14a und durch den Rückkopplungsanschluss 14b bistabil ansteuerbar.

Gewissermaßen ist der Steuerkolben 16 durch den Steueranschluss 14a über den Rückkopplungsanschluss 14b, insbesondere über den Rückkopplungsanschluss 14b und die Rückkopplungsleitung 24, bistabil ansteuerbar.

### BEZUGSZEICHENLISTE

- 10: Anhängersteuermodul
- 12: Parkbremseinrichtung
- 14: Gehäuse
- 14a: erster Steueranschluss
- 14b: Rückkopplungsanschluss
- 14c: erste Druckkammer
- 14d: zweite Druckkammer
- 14e: Backup-Steueranschluss
- 14f: dritte Druckkammer
- 14g: Anhänger-Steueranschluss
- 14h: Anhänger-Versorgungsanschluss
- 14i: vierte Druckkammer
- 16: Steuerkolben
- 16a: erste pneumatische Wirkfläche
- 16b: zweite pneumatische Wirkfläche
- 18: Versorgunganschluss
- 20: Versorgungsleitung
- 20a: Versorgungsleitung-Abzweigung
- 22: erste Steuerleitung
- 22a: erste Steuer-Abzweigung
- 22b: zweite Steuer-Abzweigung
- 24: Rückkopplungsleitung
- 26: Drossel
- 28: erstes Steuerventil
- 30: Steuerventilanordnung
- 32: zweites Steuerventil
- 32a: pneumatischer Ventil-Steueranschluss
- 34: drittes Steuerventil
- 36: Fußbremsventil-Steuerleitung
- 38: zweite Steuerleitung
- 40: viertes Steuerventil
- 42: Backup-Steuerkolben
- 42a: pneumatische Wirkfläche des Backup-Steuerkolbens
- 44: Backup-Steuerleitung
- 46: Anhänger-Steuerleitung
- 48: Drucksensor
- 50: Anhänger-Versorgungsleitung
- 52: Kolbenfeder
- 54: Entlüftung
- 56: Führungs- bzw. Dichtungshülse
- 58: Anhänger-Steuerleitung-Abzweigung
- 60: PPB/EPB-Leitung
- 62: erste Abzweigung der Rückkopplungsleitung
- 64: zweite Abzweigung der Rückkopplungsleitung
- 66: fünftes Steuerventil

- 110: Anhängersteuermodul

- 210: Anhängersteuermodul

- 310: Anhängersteuermodul

- 410: Anhängersteuermodul

- 510: Anhängersteuermodul

## Patentansprüche

1. Anhängersteuermodul (10, 110, 210, 310, 410, 510) für eine Bremseinrichtung, insbesondere elektronische Parkbremseinrichtung (12), für ein Fahrzeug, insbesondere Nutzfahrzeug, mit wenigstens einem Steuerkolben (16); und mit wenigstens einem Gehäuse (14), in welchem der Steuerkolben (16) aufgenommen ist, wobei das Gehäuse (14) wenigstens einen Steueranschluss (14a) aufweist, wobei das Gehäuse (14) weiter wenigstens einen Versorgunganschluss (18) aufweist, der mit wenigstens einer Versorgungsleitung (20) zur Versorgung des Anhängersteuermoduls (10, 110, 210, 310, 410, 510) mit Druckfluid verbunden ist, **dadurch gekennzeichnet, dass** das Gehäuse (14) ferner wenigstens einen Rückkopplungsanschluss (14b) zum Steuern des Steuerkolbens (16) aufweist, wobei der Steuerkolben (16) durch den Steueranschluss (14a) und durch den Rückkopplungsanschluss (14b) bistabil ansteuerbar ist.

2. Anhängersteuermodul (10, 110, 210, 310) nach Anspruch 1,
**dadurch gekennzeichnet, dass**
der Steueranschluss (14a) mit wenigstens einer ersten Steuerleitung (22) verbindbar ist, wobei die Versorgungsleitung (20) wenigstens eine Versorgungsleitung-Abzweigung (20a) aufweist; wobei der Steueranschluss (14a) über die erste Steuerleitung (22) und über die Versorgungsleitung-Abzweigung (20a) mit der Versorgungsleitung (20) verbindbar ist.

3. Anhängersteuermodul (10, 110, 210, 310) nach Anspruch 2,
**dadurch gekennzeichnet, dass**
die erste Steuerleitung (22) wenigstens eine erste Steuer-Abzweigung (22a) aufweist, wobei der Rückkopplungsanschluss (14b) über wenigstens eine Rückkopplungsleitung (24) mit der ersten Steuer-Abzweigung (22a) verbindbar ist.

4. Anhängersteuermodul (10, 110, 310, 410, 510) nach Anspruch 3,
**dadurch gekennzeichnet, dass**
in der ersten Steuerleitung (22) und/oder in der Rückkopplungsleitung (24) wenigstens eine Drossel (26) angeordnet ist.

5. Anhängersteuermodul (10, 110, 210, 310) nach einem der Ansprüche 3 oder 4, **dadurch gekennzeichnet, dass**
in der ersten Steuerleitung (22) wenigstens ein erstes Steuerventil (28), insbesondere ein 2/2-Wege-Magnetsteuerventil, angeordnet ist.

6. Anhängersteuermodul (10, 110, 210, 310, 410, 510) nach einem der Ansprüche 3 bis 5,
**dadurch gekennzeichnet, dass**
das Anhängersteuermodul (10, 110, 210, 310, 410, 510) wenigstens eine Steuerventilanordnung (30) aufweist oder mit wenigstens einer Steuerventilanordnung (30) gekoppelt ist, wobei die Steuerventilanordnung (30) mit der ersten Steuerleitung (22) und/oder mit der Rückkopplungsleitung (24) verbindbar ist.

7. Anhängersteuermodul (10, 110, 210, 310, 410, 510) nach Anspruch 6, **dadurch gekennzeichnet, dass** die Steuerventilanordnung (30) wenigstens ein zweites Steuerventil (32) und/oder wenigstens ein drittes Steuerventil (34) aufweist.

8. Anhängersteuermodul (10, 110, 210, 310) nach Anspruch 7,
**dadurch gekennzeichnet, dass**
das zweite Steuerventil (32) als pneumatisch angesteuertes 2/2-Wege-Steuerventil ausgebildet ist und/oder wobei das dritte Steuerventil (34) als 2/2-Wege-Magnetsteuerventil ausgebildet ist.

9. Anhängersteuermodul (10, 110, 210, 310, 410, 510) nach einem der Ansprüche 2 bis 8,
**dadurch gekennzeichnet, dass**
das Gehäuse (14) wenigstens einen Backup-Steueranschluss (14e) aufweist, der mit wenigstens einem Steuerausgang wenigstens eines Fußbremsmoduls über wenigstens eine Fußbremsventil-Steuerleitung (36) verbindbar ist.

10. Anhängersteuermodul (10, 110, 210, 310) nach Anspruch 9,
**dadurch gekennzeichnet, dass**
das zweite Steuerventil (32) wenigstens einen pneumatischen Ventil-Steueranschluss (32a) aufweist, der über wenigstens eine Backup-Steuerleitung (44) mit der Fußbremsventil-Steuerleitung (36) verbindbar ist.

11. Anhängersteuermodul (10, 110, 210, 310) nach einem der Ansprüche 5 bis 10, **dadurch gekennzeichnet, dass**
die erste Steuerleitung (22) wenigstens eine zweite Steuer-Abzweigung (22b) aufweist, die zwischen dem ersten Steuerventil (28) und der ersten Steuer-Abzweigung (22a) angeordnet ist, wobei die Steuerventilanordnung (30) über wenigstens eine zweite Steuerleitung (38) mit der zweiten Steuer-Abzweigung (22b) verbindbar ist.

12. Anhängersteuermodul (110, 210, 410, 510) nach einem der Ansprüche 7 bis 10, **dadurch gekennzeichnet, dass**
das zweite Steuerventil (32) in der Rückkopplungsleitung (24) angeordnet ist.

13. Anhängersteuermodul (210) nach Anspruch 12,
**dadurch gekennzeichnet, dass**
die Drossel (26) in das zweite Steuerventil (32) integriert ist.

14. Parkbremseinrichtung (12), insbesondere elektronische Parkbremseinrichtung (12), für ein Fahrzeug, insbesondere Nutzfahrzeug, mit wenigstens einem Anhängersteuermodul (10, 110, 210, 310, 410, 510) nach einem der vorhergehenden Ansprüche.

15. Nutzfahrzeug, insbesondere mit wenigstens einem Zugfahrzeug und mit wenigstens einem Anhänger, mit wenigstens einer Parkbremseinrichtung (12) nach Anspruch 14 und mit wenigstens einem Anhängersteuermodul (10, 110, 210, 310, 410, 510) nach einem der vorhergehenden Ansprüche.

## Claims

1. Trailer control module (10, 110, 210, 310, 410, 510) for a brake device, in particular an electronic parking brake device (12), for a vehicle, in particular a commercial vehicle, having at least one control piston (16) and having at least one housing (14) in which the control piston (16) is accommodated, wherein the housing (14) has at least one control port (14a), wherein the housing (14) further has at least one supply port (18) which is connected to at least one supply line (20) for supplying the trailer control module (10, 110, 210, 310, 410, 510) with pressurized fluid,
**characterized in that** the housing (14) further has at least one feedback port (14b) for controlling the control piston (16), wherein the control piston (16) is bistably activatable by the control port (14a) and by the feedback port (14b).

2. Trailer control module (10, 110, 210, 310) according to claim 1,
**characterized in that**
the control port (14a) can be connected to at least a first control line (22), wherein the supply line (20) has at least one supply line branch (20a), wherein the control port (14a) can be connected to the supply line (20) via the first control line (22) and via the supply line branch (20a).

3. Trailer control module (10, 110, 210, 310) according to claim 2,
**characterized in that**
the first control line (22) has at least one first control branch (22a), wherein the feedback port (14b) can be connected to the first control branch (22a) via at least one feedback line (24).

4. Trailer control module (10, 110, 310, 410, 510) according to claim 3,
**characterized in that**
at least one throttle (26) is arranged in the first control line (22) and/or in the feedback line (24).

5. Trailer control module (10, 110, 210, 310) according to any one of claims 3 or 4, **characterized in that**
at least a first control valve (28), in particular a 2/2-way solenoid control valve, is arranged in the first control line (22).

6. Trailer control module (10, 110, 210, 310, 410, 510) according to any one of claims 3 to 5,
**characterized in that**
the trailer control module (10, 110, 210, 310, 410, 510) has at least one control valve assembly (30) or is coupled to at least one control valve assembly (30), wherein the control valve assembly (30) can be connected to the first control line (22) and/or to the feedback line (24).

7. Trailer control module (10, 110, 210, 310, 410, 510) according to claim 6, **characterized in that**
the control valve assembly (30) has at least one second control valve (32) and/or at least one third control valve (34).

8. Trailer control module (10, 110, 210, 310) according to claim 7,
**characterized in that**
the second control valve (32) is configured as a pneumatically activated 2/2-way control valve and/or wherein the third control valve (34) is configured as a 2/2-way solenoid control valve.

9. Trailer control module (10, 110, 210, 310, 410, 510) according to any one of claims 2 to 8,
**characterized in that**
the housing (14) has at least one backup control port (14e) which can be connected to at least one control output of at least one footbrake module via at least one footbrake valve control line (36).

10. Trailer control module (10, 110, 210, 310) according to claim 9,
**characterized in that**
the second control valve (32) has at least one pneumatic valve control port (32a) which can be connected via at least one backup control line (44) to the footbrake valve control line (36).

11. Trailer control module (10, 110, 210, 310) according to any one of claims 5 to 10, **characterized in that**
the first control line (22) has at least a second control branch (22b) which is arranged between the first control valve (28) and the first control branch (22a), wherein the control valve assembly (30) can be connected to the second control branch (22b) via at least a second control line (38).

12. Trailer control module (110, 210, 410, 510) according to any one of claims 7 to 10, **characterized in that**
the second control valve (32) is arranged in the feedback line (24).

13. Trailer control module (210) according to claim 12,
**characterized in that**
the throttle (26) is integrated into the second control valve (32).

14. Parking brake device (12), in particular an electronic parking brake device (12), for a vehicle, in particular a commercial vehicle, having at least one trailer control module (10, 110, 210, 310, 410, 510) according to any one of the preceding claims.

15. Commercial vehicle, in particular having at least one towing vehicle and having at least one trailer, having at least one parking brake device (12) according to claim 14 and having at least one trailer control module (10, 110, 210, 310, 410, 510) according to any one of the preceding claims.

## Revendications

1. Module de commande de remorque (10, 110, 210, 310, 410, 510) pour un dispositif de freinage, en particulier dispositif de frein de stationnement (12) électronique, pour un véhicule, en particulier un véhicule utilitaire, avec au moins un piston de commande (16) ; et avec au moins un boîtier (14), dans lequel le piston de commande (16) est reçu, dans lequel le boîtier (14) présente au moins un raccord de commande (14a), dans lequel le boîtier (14) présente en outre au moins un raccord d'alimentation (18) qui est relié à au moins une conduite d'alimentation (20) pour l'alimentation du module de commande de remorque (10, 110, 210, 310, 410, 510) en fluide sous pression,
**caractérisé en ce que** le boîtier (14) présente de plus au moins un raccord de rétroaction (14b) pour la commande du piston de commande (16), dans lequel le piston de commande (16) peut être commandé de manière bistable par le raccord de commande (14a) et le raccord de rétroaction (14b)

2. Module de commande de remorque (10, 110, 210, 310) selon la revendication 1, **caractérisé en ce que**
le raccord de commande (14a) peut être relié à au moins une première conduite de commande (22), dans lequel la conduite d'alimentation (20) présente au moins une dérivation de conduite d'alimentation (20a) ; dans lequel le raccord de commande (14a) peut être relié par le biais de la première conduite de commande (22) et par le biais de la dérivation de conduite d'alimentation (20a) à la conduite d'alimentation (20).

3. Module de commande de remorque (10, 110, 210, 310) selon la revendication 2, **caractérisé en ce que**
la première conduite de commande (22) présente au moins une première dérivation de commande (22a), dans lequel le raccord de rétroaction (14b) peut être relié par le biais d'au moins une conduite de rétroaction (24) à la première dérivation de commande (22a).

4. Module de commande de remorque (10, 110, 310, 410, 510) selon la revendication 3,
**caractérisé en ce que**
au moins un étranglement (26) est agencé dans la première conduite de commande (22) et/ou dans la conduite de rétroaction (24).

5. Module de commande de remorque (10, 110, 210, 310) selon l'une quelconque des revendications 3 ou 4,
**caractérisé en ce que**
au moins une première soupape de commande (28), en particulier une soupape de commande magnétique à 2/2 voies est agencée dans la première conduite de commande (22).

6. Module de commande de remorque (10, 110, 210, 310, 410, 510) selon l'une quelconque des revendications 3 à 5,
**caractérisé en ce que**
le module de commande de remorque (10, 110, 210, 310, 410, 510) présente au moins un agencement de soupape de commande (30) ou est couplé à au moins un agencement de soupape de commande (30), dans lequel l'agencement de soupape de commande (30) peut être relié à la première conduite de commande (22) et/ou à la conduite de rétroaction (24).

7. Module de commande de remorque (10, 110, 210, 310, 410, 510) selon la revendication 6,
**caractérisé en ce que**
l'agencement de soupape de commande (30) présente au moins une deuxième soupape de commande (32) et/ou au moins une troisième soupape de commande (34).

8. Module de commande de remorque (10, 110, 210, 310) selon la revendication 7, **caractérisé en ce que**
la deuxième soupape de commande (32) est formée comme soupape de commande à 2/2 voies commandée pneumatiquement et/ou dans lequel la troisième soupape de commande (34) est formée comme soupape de commande magnétique à 2/2 voies.

9. Module de commande de remorque (10, 110, 210, 310, 410, 510) selon l'une quelconque des revendications 2 à 8,
**caractérisé en ce que**
le boîtier (14) présente au moins un raccord de commande de secours (14e) qui peut être relié à au moins une sortie de commande au moins d'un module de pédale de frein par le biais d'au moins une conduite de commande de soupape de pédale de frein (36).

10. Module de commande de remorque (10, 110, 210, 310) selon la revendication 9, **caractérisé en ce que**
la deuxième soupape de commande (32) présente au moins un raccord de commande de soupape (32a) pneumatique qui peut être relié par le biais d'au moins une conduite de commande de secours (44) à la conduite de commande de soupape de pédale de frein (36).

11. Module de commande de remorque (10, 110, 210, 310) selon l'une quelconque des revendications 5 à 10, **caractérisé en ce que**
la première conduite de commande (22) présente au moins une seconde dérivation de commande (22b) qui est agencée entre la première soupape de commande (28) et la première dérivation de commande (22a), dans lequel l'agencement de soupape de commande (30) peut être reliée par le biais d'au moins une seconde conduite de commande (38) à la seconde dérivation de commande (22b).

12. Module de commande de remorque (110, 210, 410, 510) selon l'une quelconque des revendications 7 à 10, **caractérisé en ce que**
la deuxième soupape de commande (32) est agencée dans la conduite de rétroaction (24).

13. Module de commande de remorque (210) selon la revendication 12,
**caractérisé en ce que**
l'étranglement (26) est intégré dans la deuxième soupape de commande (32).

14. Dispositif de frein de stationnement (12), en particulier dispositif de frein de stationnement électronique (12) pour un véhicule, en particulier un véhicule utilitaire, avec au moins un module de commande de remorque (10, 110, 210, 310, 410, 510) selon l'une quelconque des revendications précédentes.

15. Véhicule utilitaire, en particulier avec au moins un véhicule tracteur et avec au moins une remorque, avec au moins un dispositif de frein de stationnement (12) selon la revendication 14 et avec au moins un module de commande de remorque (10, 110, 210, 310, 410, 510) selon l'une quelconque des revendications précédentes.
